# EUROPEAN PATENT APPLICATION

(11) **EP 3 967 190 A1**
(43) Date of publication of application: **16.03.2022**
(21) Application number: 19931971.6
(22) Date of filing: 21.11.2019
(51) Int. Cl.: A47J 37/06, A47J 37/04

(54) **COOKING UTENSIL**

(30) Priority: 06.06.2019 CN 201910491257
(71) Applicant: Guangdong Midea Consumer Electric Manufacturing Co., Ltd., Shunde District Foshan, Guangdong 528311 (CN)
(72) Inventor: BURTON, Christopher, Foshan, Guangdong 528311 (CN); DU, Zujing, Foshan, Guangdong 528311 (CN); WU, Jian, Foshan, Guangdong 528311 (CN); CHEN, Huaqiao, Foshan, Guangdong 528311 (CN)
(74) Representative: Whitlock, Holly Elizabeth Ann
(86) International application number: PCT/CN2019/119917
(87) International publication number: WO 2020/244168

(57) **Abstract**

A cooking utensil (100), comprising: a main body (10), the main body (10) comprising an infrared heating member (20); an infrared wave-transmitting isolating member (30), the infrared wave-transmitting isolating member (30) comprising a first side surface (31) provided facing the infrared heating member (20) and a second side surface (32) provided facing away from the infrared heating member (20), and at least a part of the first side surface (31) being not coplanar with another part of the first side surface (31).

## Description

### CROSS-REFERENCE TO RELATED APPLICATIONS

This application is based on and claims the priority to Chinese Patent Application No. 201910491257.4, filed on June 6, 2019, the entire contents of which are incorporated herein by reference.

### FIELD

This application relates to the technical field of household appliances, and more particularly, to a cooking utensil.

### BACKGROUND

In an existing infrared grill, a heating member is usually arranged outside and below a baking tray, and the heating member radiates heat to the baking tray by reflection, to realize heating and cooking of food on the baking tray. However, there is a problem in the related art that the heat cannot be fully radiated to the baking tray, which leads to insufficient utilization of the heat and additional loss and waste. Thus, there is room for improvement.

### SUMMARY

The present disclosure aims to at least solve one of the technical problems existing in the related art. Accordingly, an objective of the present disclosure is to propose a cooking utensil, which has a high energy utilization rate.

The cooking utensil according to embodiments of the present disclosure includes: a body, including an infrared heating member; and an infrared wave-transmitting separator, including a first side surface facing the infrared heating member and a second side surface facing away from the infrared heating member, at least a part of the first side surface being non-coplanar with another part of the first side surface.

For the cooking utensil according to the embodiments of the present disclosure, by configuring at least two parts of the first side surface of the infrared wave-transmitting separator to be non-coplanar, the infrared wave-transmitting separator can refract infrared rays emitted by the infrared heating member in multiple directions, so that most of the infrared rays are radiated to a surface of an object to be radiated, preventing the infrared rays from being radiated to other positions. Thus, the infrared rays emitted by infrared heating member can be fully utilized, improving the energy utilization rate, user experience, and market competitiveness of the product.

In the cooking utensil according to some embodiments of the present disclosure, at least a part of one of the first side surface and the second side surface is arranged at a preset acute angle to at least a part of the other of the first side surface and the second side surface.

In the cooking utensil according to some embodiments of the present disclosure, one of the first side surface and the second side surface forms a smooth plane, and at least a part of the other of the first side surface and the second side surface forms an inclined surface obliquely arranged relative to the smooth plane.

Specifically, the second side surface forms the smooth plane, and at least a part of the first side surface forms the inclined surface obliquely arranged relative to the smooth plane.

Specifically, the inclined surface extends towards the smooth plane from top down.

Specifically, there are a plurality of inclined surfaces, and the plurality of inclined surfaces are spaced in an extension direction of the infrared wave-transmitting separator.

Further, included angles between the plurality of inclined surfaces and the smooth plane are equal.

Further, included angles between the plurality of inclined surfaces and a horizontal plane increase successively from top down.

Optionally, two adjacent inclined surfaces are connected in a smooth transition; and/or two adjacent inclined surfaces are connected by a plane.

In the cooking utensil according to some embodiments of the present disclosure, the second side surface is arranged perpendicularly to a horizontal plane.

In the cooking utensil according to some embodiments of the present disclosure, the infrared wave-transmitting separator is a glass member.

In the cooking utensil according to some embodiments of the present disclosure, a support frame is arranged within the body, and a part of the infrared wave-transmitting separator close to an edge of the infrared wave-transmitting separator forms a straight section fixedly connected to the support frame.

In the cooking utensil according to some embodiments of the present disclosure, the body also includes: an object holder, in which the infrared heating member is arranged below the object holder, and the infrared wave-transmitting separator separates the object holder from the infrared heating member.

In the cooking utensil according to some embodiments of the present disclosure, the object holder is grid-shaped, and the body further includes a receiving tray arranged below the object holder to receive dripping objects from the object holder.

In the cooking utensil according to some embodiments of the present disclosure, the cooking utensil is a smokeless infrared grill.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

The above and/or additional aspects and advantages of the present disclosure will become apparent and more readily appreciated from the following descriptions made with reference to the drawings, in which:
FIG. 1 is a schematic view of a cooking utensil according to some embodiments of the present disclosure;
FIG. 2 is an enlarged view of structure A in FIG. 1.

Reference numerals:
cooking utensil 100,
body 10,
infrared heating member 20,
infrared wave-transmitting separator 30, first side surface 31, second side surface 32, inclined surface 33,
object holder 40, support frame 50, receiving tray 60.

### DETAILED DESCRIPTION

Embodiments of the present disclosure will be described in detail below, and examples of the embodiments will be shown in the accompanying drawings. The same or similar elements and the elements having same or similar functions are denoted by like reference numerals throughout the descriptions. The embodiments described below are exemplary and are intended to explain the present disclosure rather than limit the present disclosure.

In the description of the present disclosure, it is to be understood that terms such as "central," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial" and "circumferential" should be construed to refer to the orientation as then described or as shown in the drawings under discussion. These relative terms are for convenience and simplicity of description and do not indicate or imply that the devices or elements referred to have a particular orientation and be constructed or operated in a particular orientation. Thus, these terms shall not be construed as limitation on the present disclosure. In addition, the feature defined with "first" and "second" may include one or more this features, either explicitly or implicitly. In the description of the present disclosure, "a plurality of' means two or more than two, unless specified otherwise.

In the description of the present disclosure, it is to be understood that terms "mounted," "connected," "coupled" and the like are used broadly, and may be, for example, fixed connections, detachable connections, or integral connections; may also be mechanical or electrical connections; may also be direct connections or indirect connections via intervening structures; may also be inner communication or interaction of two elements, which can be understood by those skilled in the art according to specific situations.

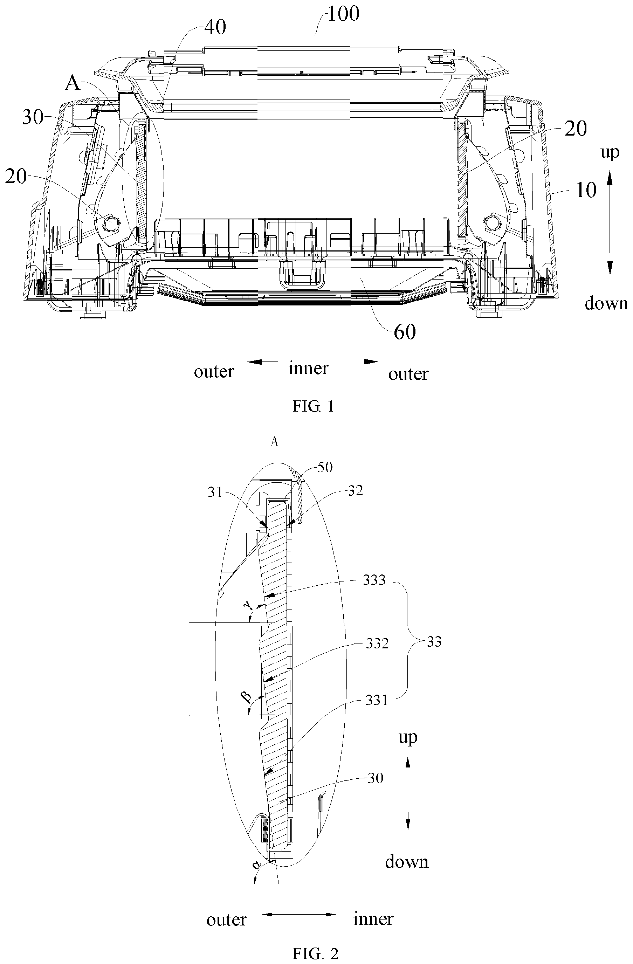

The cooking utensil 100 according to embodiments of the present disclosure will be described below with reference to FIGS. 1 and 2.

As shown in FIGS. 1 and 2, the cooking utensil 100 according to some embodiments of the present disclosure includes: a body 10 and an infrared wave-transmitting separator 30. The body 10 includes an infrared heating member 20. The infrared wave-transmitting separator 30 includes a first side surface 31 and a second side surface 32 opposite to each other. The first side surface 31 is arranged facing the infrared heating member 20, and the second side surface 32 is arranged facing away from the infrared heating member 20. At least a part of the first side surface 31 is not coplanar with another part of the first side surface 31, i.e., there are at least two planes on the first side surface 31 that are not coplanar. The at least two planes can intersect or be parallel; or there is an arc surface on the first side surface.

For the cooking utensil 100 according to the embodiment of the present disclosure, by configuring at least two parts of the first side surface 31 of the infrared wave-transmitting separator 30 to be non-coplanar, the infrared wave-transmitting separator 30 can refract infrared rays emitted by the infrared heating member 20 in multiple directions, so that most of the infrared rays are radiated to a surface of an object to be radiated, preventing the infrared rays from being radiated to other positions. Thus, the infrared rays emitted by infrared heating member 20 can be fully utilized, improving the energy utilization rate, user experience, and market competitiveness of the product.

According to some embodiments of the present disclosure, at least a part on the first side surface 31 is not parallel to at least a part on the second side surface 32, in which the part on the first side surface 31 and the part on the second side surface 32 can be arranged in a corresponding manner, i.e., there is an included angle between two outer surfaces of the infrared wave-transmitting separator 30 that are directed away from each other, and at least a part of the first side surface 31 is arranged at a preset acute angle to at least a part of the second side surface 32, to refract the infrared rays emitted by the infrared heating member 20.

In addition, the part on the first side surface 31 and the part on the second side surface 32 may also be arranged in a non-corresponding manner, i.e., a part on the first side surface 31 is arranged at a preset acute angle to a part on the second side surface 32, which is not corresponding with it. For example, in an extension direction of the infrared wave-transmitting separator 30, the first side surface 31 includes a plurality of planes from top down, and the second side surface 32 also includes a plurality of corresponding planes from top down. An uppermost plane of the first side surface 31 is arranged in parallel with an uppermost plane of the second side surface 32, but the uppermost plane of the first side surface 31 is at an acute angle to a lowermost plane or other planes other than the uppermost plane of the second side surface 32. Thus, neither the first side surface 31 nor the second side surface 32 is a smooth plane structure, so that the infrared rays emitted by the infrared heating member 20 can be refracted in multiple directions, most of the infrared rays can be radiated to the surface of the object to be radiated, and the utilization rate of the infrared rays can be improved.

For the cooking utensil 100 according to the embodiment of the present disclosure, by arranging the outer surfaces of the infrared wave-transmitting separator 30 at the preset angle, the infrared rays emitted by the infrared heating member 20 can be refracted, most of the infrared rays can be radiated to the surface of the object to be radiated instead of other positions, and thus the infrared rays emitted by the infrared heating member 20 can be fully utilized, improving the energy utilization rate, user experience, and the market competitiveness of the product.

Further, the body 10 includes an object holder 40, the infrared heating member 20 is arranged below the object holder 40, and the infrared wave-transmitting separator 30 is used to separate the object holder 40 from the infrared heating member 20, to prevent dripping objects on the object holder 40 from falling into the infrared heating member 20 and affecting normal use of the infrared heating member 20.

For the cooking utensil 100 according to the embodiment of the present disclosure, by providing the infrared wave-transmitting separator 30 between the object holder 40 and the infrared heating member 20, the infrared heating member 20 can be protected; by arranging the outer surfaces of the infrared wave-transmitting separator 30 at the preset angle, the infrared rays emitted by the infrared heating member 20 can be refracted, most of the infrared rays can be radiated to the object holder 40 instead of other positions, to cook and heat the food on the object holder 40, and thus the infrared rays emitted by infrared heating member 20 can be fully utilized, improving the energy utilization rate, user experience, and the market competitiveness of the product.

As shown in FIGS. 1 and 2, according to some embodiments of the present disclosure, the infrared wave-transmitting separator 30 extends along an up-down direction. The first side surface 31 forms a smooth plane, and at least a part of the second side surface 32 forms an inclined surface 33. The inclined surface 33 is arranged obliquely relative to the smooth plane, so that a certain angle is formed between the first side surface 31 and the second side surface 32, to refract the infrared rays emitted by the infrared heating member 20. Thus, the infrared rays can be radiated to the object holder 40. Moreover, the structure of the infrared wave-transmitting separator 30 can be simplified by forming the first side surface 31 as the smooth plane, so that the manufacturing process and manufacturing accuracy of the infrared wave-transmitting separator 30 can be simplified and the production efficiency can be improved.

Certainly, the first side surface 31 may also form an inclined surface 33 extending obliquely relative to the extension direction of the infrared wave-transmitting separator 30 (the up-down direction as shown in FIG. 2), and the second side surface 32 may also form an inclined surface 33 extending obliquely relative to the extension direction of the infrared wave-transmitting separator 30 (the up-down direction as shown in FIG. 2). The first side surface 31 and the second side surface 32 may also be arranged symmetrically along the up-down direction.

As shown in FIGS. 1 and 2, according to some embodiments of the present disclosure, the second side surface 32 forms a smooth plane, i.e., a side away from the infrared heating member 20 is a smooth plane. At least a part of the first side surface 31 forms an inclined surface 33, and the inclined surface 33 is arranged obliquely relative to the second side surface 32. The dripping objects from the object holder 40 will not remain on the infrared wave-transmitting separator 30 by forming the second side surface 32 as the smooth plane, to avoid residual stains on the infrared wave-transmitting separator 30, which may otherwise diminish a transmission effect of the infrared rays and affect a cooking effect of the cooking utensil 100, degrading user experience. Moreover, the infrared wave-transmitting separator 30 can produce a prismatic effect by forming a side close to the infrared heating member 20 as the inclined surface, so that the infrared rays emitted by the infrared heating member 20 can be fully radiated to the object holder 40, reducing loss due to radiation to other positions and improving the energy utilization rate.

In some examples, the object holder 40 is arranged to extend in a horizontal direction, the second side surface 32 of the infrared wave-transmitting separator 30 is arranged to extend in a vertical direction, and an extension direction of the second side surface 32 is perpendicular to an extension direction of the object holder 40. That is, the second side surface 32 is arranged perpendicularly to a horizontal plane, further preventing the dripping objects from the object holder 40 from remaining on the infrared wave-transmitting separator 30. Further, an angle between the extension direction of the second side surface 32 and the extension direction of the object holder 40 can also be an obtuse angle, so that the dripping objects from the object holder 40 gradually move away from the infrared wave-transmitting separator 30 during a dripping process, further preventing the dripping objects from the object holder 40 from remaining on the infrared wave-transmitting separator 30.

In some specific examples, the infrared wave-transmitting separator 30 extends along the up-down direction, the object holder 40 is located above the infrared wave-transmitting separator 30, the infrared heating member 20 is located at a position close to a lower part of the infrared wave-transmitting separator 30, and the infrared heating member 20 and the object holder 40 are located on both sides of the infrared wave-transmitting separator 30. In the extension direction of the infrared wave-transmitting separator 30, the inclined surface 33 gradually extends towards the smooth plane from top down, so that an acute angle is formed between the inclined surface 33 and the smooth plane, and the infrared rays emitted by the infrared heating member 20 can be refracted to the object holder 40, realizing the full utilization of energy.

In some examples, there are a plurality of inclined surfaces 33, and the plurality of inclined surfaces 33 are spaced in the extension direction of the infrared wave-transmitting separator 30. By providing the plurality of inclined surfaces 33, the thickness of the infrared wave-transmitting separator 30 can be reduced, to facilitate the manufacturing and assembly of the infrared wave-transmitting separator 30. Inclination angles of the plurality of inclined surfaces 33 can be adjusted, so that the infrared rays emitted by the infrared heating member 20 can be evenly refracted onto the object holder 40, and the food on the object holder 40 can be heated evenly and taste good, and the cooking effect is excellent. Two adjacent inclined surfaces 33 are connected in a smooth transition, so that infrared rays between the two inclined surfaces 33 may also be refracted to the object holder 40, further improving the utilization rate of the infrared heating member 20.

In some optional examples, the two adjacent inclined surfaces 33 can also be connected through a plane to facilitate the manufacturing of the infrared wave-transmitting separator 30 and improve the manufacturing accuracy thereof; or part of the plurality of inclined surfaces 33 are connected through a plane, and the other part thereof are connected by an arc transition, which will not be limited here as long as it is suitable for refraction of the infrared rays.

In some optional examples, there are a plurality of inclined surfaces 33, and an included angle between each inclined surface 33 and the smooth plane is equal. For example, the plurality of inclined surfaces 33 includes a first inclined surface 331, a second inclined surface 332 and a third inclined surface 333; and an included angle between the first inclined surface 331 and the horizontal plane is α, an included angle between the first inclined surface 331 and the horizontal plane is β, and an included angle between the first inclined surface 331 and the horizontal plane is γ, in which α=β=γ. Thus, the structure of the infrared wave-transmitting separator 30 can be simplified, and the manufacturing and assembly of the infrared wave-transmitting separator 30 can be facilitated.

In other optional examples, the included angles between the plurality of inclined surfaces 33 and the smooth plane are different, so that the infrared rays emitted by the infrared heating member 20 can be evenly refracted to the object holder 40, the food on the object holder 40 can be evenly heated, and the cooking effect and the taste can be improved.

For example, the included angles between the plurality of inclined surfaces 33 and the smooth plane decrease successively from a first side close to the object holder 40 to a second side far away from the object holder 40 in the extension direction of the infrared wave-transmitting separator 30. As shown in FIG. 2, the plurality of inclined surfaces 33 include a first inclined surface 331, a second inclined surface 332 and a third inclined surface 333 spaced apart from each other from top down; and an included angle between the first inclined surface 331 and the horizontal plane is α, an included angle between the first inclined surface 331 and the horizontal plane is β, and an included angle between the first inclined surface 331 and the horizontal plane is γ, in which α>β >γ. Preferably, α=85°, β=80°, and γ=75°.

According to some embodiments of the present disclosure, the infrared wave-transmitting separator 30 is a glass member that has good wave-transmitting performance, a wide range of sources, low cost, and mature manufacturing process, and is convenient to apply widely.

According to some embodiments of the present disclosure, a support frame 50 is arranged within the body 10, and an edge of the infrared wave-transmitting separator 30 is fixedly connected with the support frame 50, to realize fixation of the infrared wave-transmitting separator 30. Since only the edge of the infrared wave-transmitting separator 30 is fixed, the transmission and refraction of the infrared rays by the infrared wave-transmitting separator 30 can be facilitated, avoiding blocking of the infrared rays and affecting the heating effect.

In some examples, the first side surface 31 forms a smooth straight section at a junction with the support frame 50, i.e., at this section, the first side surface 31 and the second side surface 32 are parallel and both extend in the vertical direction, which can facilitate the fixation and installation of the infrared wave-transmitting separator 30. The support frame 50 can form an open groove with a U-shaped longitudinal section, and the infrared wave-transmitting separator 30 can be directly inserted into the support frame 50, so that the installation can be simplified, the assembly efficiency can be improved, and the sealing performance and stability after assembly can be enhanced to prevent the dripping objects from the object holder 40 from entering a placement area of the infrared heating member 20 and affecting the performance.

According to some embodiments of the present disclosure, the object holder 40 is grid-shaped, and the body 10 also includes a receiving tray 60 arranged below the object holder 40 and used to receive the dripping objects from the object holder 40, for example, oil of the food can drip onto the receiving tray 60 through the grid-shaped object holder 40. The receiving tray 60 is detachably connected to the body 10, so it is convenient to dump and eliminate the dripping objects in the receiving tray 60, which improves the convenience of use.

According to some embodiments of the present disclosure, the cooking utensil 100 is a smokeless infrared grill, and some specific embodiments of the present disclosure are described with the smokeless infrared grill as an example.

The smokeless infrared grill include: a body 10 and an infrared wave-transmitting separator 30. The body 10 includes an infrared heating member 20, an object holder 40, a support frame 50 and a receiving tray 60.

The object holder 40 is grid-shaped. The infrared heating member 20 is arranged below the object holder 40, and the infrared heating member 20 is located outside a projection of the object holder 40 on a plane where the infrared heating member 20 is located. A projection of the object holder 40 on a plane where the receiving tray 60 is located falls into the receiving tray 60, so that the dripping objects from the object holder 40 can completely drip onto the receiving tray 60.

The infrared wave-transmitting separator 30 is fixed to the body 10 through the support frame 50, and the infrared wave-transmitting separator 30 is used to separate the object holder 40 from the infrared heating member 20, to prevent the dripping objects from the object holder 40 from falling into the infrared heating member 20.

The infrared wave-transmitting separator 30 includes a first side surface 31 and a second side surface 32 directed away from each other. The second side surface 32 is arranged facing away from the infrared heating member 20, and the second side surface 32 forms a smooth plane. Moreover, the second side surface 32 is arranged to extend in the vertical direction, and an extension direction of the second side surface 32 is perpendicular to an extension direction of the object holder 40.

The first side surface 31 is arranged facing the infrared heating member 20. The first side surface 31 includes an inclined surface 33 obliquely arranged relative to the second side surface 32. The inclined surface 33 includes a first inclined surface 331, a second inclined surface 332 and a third inclined surface 333 spaced apart from each other from top down, and two adjacent inclined surfaces 33 are connected in a smooth transition. An included angle between the first inclined surface 331 and a horizontal plane is α, an included angle between the first inclined surface 331 and the horizontal plane is β, and an included angle between the first inclined surface 331 and the horizontal plane is γ, in which α=β=γ=83°. Thus, the infrared wave-transmitting separator 30 can refract the infrared rays emitted by the infrared heating member 20.

For the smokeless infrared grill according to the embodiments of the present disclosure, the infrared wave-transmitting separator 30 can protect the infrared heating member 20. By forming the inclined surface 33 on the first side surface 31 of the infrared wave-transmitting separator 30, the infrared wave-transmitting separator 30 can refract the infrared rays emitted by the infrared heating member 20, and most of the infrared rays can be radiated to the object holder 40 instead of other positions to heat and cook the food on the object holder 40.Thus, the infrared rays emitted by the infrared heating member 20 can be fully utilized, which improves the energy utilization rate, user experience, and the market competitiveness of the product.

Other configurations and operations of the cooking utensil 100 according to the embodiments of the present disclosure are known to those skilled in the art, and will not be described in detail here.

In the description of the present disclosure, unless specified or limited otherwise, a structure in which a first feature is "on" or "below" a second feature may include some embodiments in which the first feature is in direct contact with the second feature, and may also include some embodiments in which the first feature and the second feature are not in direct contact with each other, but are contacted via an additional feature formed therebetween. Furthermore, a first feature "on," "above," or "on top of' a second feature may include some embodiments in which the first feature is right or obliquely "on," "above," or "on top of' the second feature, or just means that the first feature is at a height higher than that of the second feature; while a first feature "below," "under," or "on bottom of' a second feature may include some embodiments in which the first feature is right or obliquely "below," "under," or "on bottom of' the second feature, or just means that the first feature is at a height lower than that of the second feature.

In the description of the present disclosure, reference to terms "one embodiment," "some embodiments," "an exemplary embodiment," "an example," "a specific example," "some examples" or the like means that a particular feature, structure, material, or characteristic described in connection with some embodiments or examples is included in at least one embodiment or example of the present disclosure. In this specification, the above terms are not necessarily referring to the same embodiment or example. Furthermore, the particular features, structures, materials, or characteristics described may be combined in any suitable manner in any one or more embodiments or examples.

Although embodiments of the present disclosure have been shown and described, it can be appreciated by those skilled in the art that various changes, modifications, alternatives and variants can be made to these embodiments without departing from the principle and purpose of the present disclosure. The scope of the present disclosure is limited by claims and their equivalents.

## Claims

1. A cooking utensil, comprising:
a body, comprising an infrared heating member; and
an infrared wave-transmitting separator, comprising a first side surface facing the infrared heating member and a second side surface facing away from the infrared heating member, at least a part of the first side surface being non-coplanar with another part of the first side surface.

2. The cooking utensil according to claim 1, wherein at least a part of one of the first side surface and the second side surface is arranged at a preset acute angle to at least a part of the other of the first side surface and the second side surface.

3. The cooking utensil according to claim 1, wherein one of the first side surface and the second side surface forms a smooth plane, and at least a part of the other of the first side surface and the second side surface forms an inclined surface obliquely arranged relative to the smooth plane.

4. The cooking utensil according to claim 3, wherein the second side surface forms the smooth plane, and at least a part of the first side surface forms the inclined surface obliquely arranged relative to the smooth plane.

5. The cooking utensil according to claim 3, wherein the inclined surface extends towards the smooth plane from top down.

6. The cooking utensil according to claim 3, wherein there are a plurality of inclined surfaces, and the plurality of inclined surfaces are spaced in an extension direction of the infrared wave-transmitting separator.

7. The cooking utensil according to claim 6, wherein included angles between the plurality of inclined surfaces and the smooth plane are equal.

8. The cooking utensil according to claim 6, wherein included angles between the plurality of inclined surfaces and a horizontal plane increase successively from top down.

9. The cooking utensil according to claim 6, wherein two adjacent inclined surfaces are connected in a smooth transition; and/or two adjacent inclined surfaces are connected by a plane.

10. The cooking utensil according to claim 1, wherein the second side surface is arranged perpendicularly to a horizontal plane.

11. The cooking utensil according to claim 1, wherein the infrared wave-transmitting separator is a glass member.

12. The cooking utensil according to claim 1, wherein a support frame is arranged within the body, and a part of the infrared wave-transmitting separator close to an edge of the infrared wave-transmitting separator forms a straight section fixedly connected to the support frame.

13. The cooking utensil according to claim 1, wherein the body further comprises:
an object holder, wherein the infrared heating member is arranged below the object holder, and the infrared wave-transmitting separator separates the object holder from the infrared heating member.

14. The cooking utensil according to claim 13, wherein the object holder is grid-shaped, and the body further comprises a receiving tray arranged below the object holder to receive dripping objects from the object holder.

15. The cooking utensil according to any one of claims 1 to 14, wherein the cooking utensil is a smokeless infrared grill.
